# EUROPÄISCHE PATENTSCHRIFT

(11) **EP 3 490 798 B1**
(45) Veröffentlichungstag und Bekanntmachung des Hinweises auf die Patenterteilung: **13.07.2022**
(21) Anmeldenummer: 17808039.6
(22) Anmeldetag: 20.11.2017
(51) Int. Cl.: B32B 27/08, B32B 27/30, B32B 25/08, C08J 5/18, C08K 5/00

(54) **CO-EXTRUDIERTE PVC-BASIERTE LEBENSMITTELVERPACKUNGSFOLIE UND VERFAHREN ZU DEREN HERSTELLUNG**
CO-EXTRUDED PVC-BASED FOOD PACKAGING FOIL AND METHOD FOR THE PRODUCTION THEREOF
FEUILLE D'EMBALLAGE D'ALIMENTS À BASE DE PVC CO-EXTRUDÉE ET SON PROCÉDÉ DE FABRICATION

(30) Priorität: 25.11.2016 DE 102016122818
(43) Veröffentlichungstag der Anmeldung: 05.06.2019
(73) Patentinhaber: Schmidt, Waldemar Vladimir, 67346 Speyer (DE); Schmidt, Natalya, 67346 Speyer (DE)
(72) Erfinder: SCHMIDT, Waldemar Vladimir, 67346 Speyer (DE)
(74) Vertreter: Patentanwälte Dr. Keller, Schwertfeger Partnerschaft mbB
(86) Internationale Anmeldenummer: PCT/EP2017/079737
(87) Internationale Veröffentlichungsnummer: WO 2018/095847

(56) Entgegenhaltungen:
- WO-A1-2011/110567
- WO-A1-2012/026861
- GB-A- 2 043 533
- US-A- 4 959 269
- US-A1- 2013 225 737

## Beschreibung

### Technisches Gebiet:

Die vorliegende Erfindung betrifft ein Verfahren zur Herstellung einer mehrschichtigen co-extrudierten Lebensmittelverpackungsfolie aus Polyvinylchlorid (PVC), einer Kombination aus Polyvinylchlorid (PVC) und Polyvinylidenchlorid (PVDC) oder anderen mit PVC co-polymerisierbaren Thermoplasten oder Elastomeren mit gegenüber Monoschicht-PVC-Folien verminderter und auf 40 mg/dm² begrenzter Migrationsmenge von Weichmachern in Lebensmittel. Ferner betrifft die Erfindung eine mehrschichtige co-extrudierte Lebensmittelverpackungsfolie aus Polyvinylchlorid (PVC), einer Kombination aus Polyvinylchlorid (PVC) und Polyvinylidenchlorid (PVDC) oder anderen mit PVC co-polymerisierbaren Thermoplasten oder Elastomeren mit gegenüber Monoschicht-PVC-Folien verminderter und auf 40 mg/dm² begrenzter Migrationsmenge von Weichmachern in Lebensmittel.

### Stand der Technik:

Zum Verpacken von Lebensmitteln werden unter anderem Polyvinylchlorid (PVC)-Frischhaltefolien verwendet, bei deren Herstellung eine Vielzahl von Weichmachern zum Einsatz kommen kann. In Lebensmittelverpackungen ist Weich-PVC problematisch, weil die eingesetzten Weichmacher (in unterschiedlicher Intensität) aus der Folie in das verpackte Lebensmittel migrieren. Dies gilt insbesondere für fetthaltige Lebensmittel und Substanzen, da Fett ein hohes Absorptionsvermögen für die Weichmacher aufweist. Der häufig verwendete Weichmacher DEHA (Diethylhexyladipat) ist als krebserregend eingestuft und kann darüber hinaus die embryonale Entwicklung durch eine gestörte Knochenbildung oder Organmissbildungen bewirken.

Monoschichten bei Lebensmittel-Frischhaltefolien kennt man beispielsweise von der DD 234431 A1, in der eine selbsthaftende und dehnbare Frischhaltefolie mit einer Dicke von 0,010 bis 0,020 mm entwickelt wurde. Die Folienzusammensetzung enthält Ethylen-Vinylacetat-Copolymerisat, niedermolekulares Polyethylen, einen Ester sowie gegebenenfalls anoxydiertes niedermolekulares Polyethylen.

Die FR 2686887 A1 und FR 2691436 A1 beschreiben die Herstellung von Dehnfolien aus einer Mischung von Styrol-Butadien-Styrol-Blockcopolymeren und einem Styrol-Butadien-Kautschuk als Weichphase, der noch Polyisobutylen enthalten kann. Diese Folien haben einen guten "Memory-Effekt" und können selbsthaftend hergestellt werden. Eine ähnlich aufgebaute Folie beschreibt auch die EP 0 807 132 B1. Weitere Folien auf Grundlage eines Styrol-Polymerisats für die Anwendung als Lebensmittelverpackung sind in der DE 195 03 326 A1, DE 196 21 688 A1 und der DE 197 04 275 A1 beschrieben. Die DE 10 2005 009 664 A1 beschreibt ein Mehrschichtverbundsystem aus Ethylen-/ Vinylacetat-Copolymerisaten als Haftvermittler, welches aus zwei oder mehr als zwei chemisch verschieden aufgebauten Folien mit einer geringen Haftung untereinander und einem Haftvermittler auf Basis von Ethylen-/Vinylacetat-Copolymerisaten besteht. Das dort beschriebene MehrschichtVerbundsystem dient zur Herstellung von Formkörpern (z.B. Lebensmittelboxen), die wiederverschließbar sind.

Eine Mehrschichtfolie aus thermoplastischen Polymeren ist in der DE 10 2006 031 841 A1 beschrieben, welche ohne Kaschierklebstoffe auskommt.

Eine Mehrschichtblasfolie, die mittels Co-Extrusion hergestellt wird, ist beschrieben in der DE 196 50 573 B4, wobei auch hier ein Polypropylen-Copolymer zum Einsatz kommt, das mit einem Styrol-Ethylen-Butylen-Block-Copolymer oder einem Styrol-Ethylen-Propylen-Block-Copolymer gemischt ist, wodurch ein kautschukmodifiziertes Polypropylen-Random-Copolymer erhalten wird.

PVC-Stretch-Folien werden unter Verwendung von u.a. Weichmachern bislang nur als Monofolien (hergestellt über eine Mono-Extrusion) für Lebensmittelverpackungen (beispielsweise als Lebensmittelfolie oder Frischhaltefolie) hergestellt. Dabei kommt eine Gießfolienextrusion oder eine Blasfolienextrusion zur Anwendung.

In der EU-Direktive 10/2011 werden europäische Regelungen und Vorschriften für Kunststoffverpackungen für Lebensmittel zusammengefasst. Hierbei werden u.a. Testmethoden zur Ermittlung des Migrationsverhaltens beschrieben und Produkte nach Gruppen eingeteilt. So dürfen sehr fetthaltige Produkte, wie z.B. mariniertes bzw. gebeiztes Fleisch, nur mit (PVC-) Folien mit einem Reduktionsfaktor 1 verpackt werden, während frisches Fleisch z.B. mit Folien verpackt werden darf, die einen Korrekturfaktor oder Reduktionsfaktor von 4 haben.

Es gilt folgendes: Je geringer die Migrationswerte, desto niedriger ist der notwendige Reduktionsfaktor, der benötigt wird, um die Vorgaben der o.g. EU-Direktive einzuhalten. Höhere Reduktionsfaktoren zur Einhaltung der Vorgaben der Direktive entsprechen demnach höheren Migrationswerten für Weichmacher, die das verpackte Lebensmittel potentiell kontaminieren können.

Die Verordnung schreibt als spezifische Migration (SML = Specific Migration Limit) für den Weichmacher DEHA (Diethylhexyladipat) einen Grenzwert von maximal 18 mg pro Kilogramm verpacktem Lebensmittel (entspricht 18 mg/6 dm² Folie, somit 3 mg/dm² Folie) vor. Dabei gilt als globale Migration (d.h. Migration von Weichmachern inkl. des Weichmachers DEHA) ein Grenzwert von maximal 60 mg pro Kilogramm verpacktem Lebensmittel (entspricht 60 mg/6 dm² Folie, somit 10 mg/dm² Folie).

Testet man beispielsweise die Migrationswerte eines 1 dm² großen Stücks PVC-Frischhaltefolie nach den Vorgaben der EU-Direktive 10/2011 und erhält dabei eine Migration von z.B. 27 mg, handelt es sich dabei um eine sogenannte Faktor 3-Folie, da man den Wert durch den Faktor 3 teilen muss, um auf einen Wert von nicht mehr als 10 mg/dm² zu gelangen.

Das bedeutet, dass mit der getesteten Folie nur Lebensmittel verpackt werden dürfen, die in der EU-Direktive 10/2011 mit einem Faktor 3 oder höher (z.B. Reduktionsfaktor 4) spezifiziert sind. Für mariniertes/gebeiztes Fleisch dürfte diese Folie beispielsweise nicht eingesetzt werden.

Rohes, unbehandeltes Gemüse z.B. besitzt aufgrund des nicht vorhandenen Fettanteils, keinen Reduktionsfaktor. Somit gibt es hier keine Einschränkung in der Migration.

Bislang sind im Lebensmittelbereich PVC-Folien mit einem Reduktionsfaktor von 1 möglich und erhältlich. Bei diesen Folien kommen unter anderem sehr teurere polymere bzw. hochmolekulare Weichmacher zum Einsatz. Polymer-Weichmacher haben eine deutlich geringere Migrationstendenz als monomere oder niedermolekulare Weichmacher. Der Einsatz von Polymer-Weichmachern ist jedoch insofern problematisch, dass mit steigendem Anteil von Polymer-Weichmachern die Folie steifer bzw. weniger elastisch und gleichzeitig deutlich teurer wird, als bei Monomer-Weichmachern. Das bedeutet, dass eine passende Mischung aus Polymer- und möglichst gering migrierenden Monomer-Weichmachern gefunden werden muss, um die Folie sowohl wirtschaftlich, als auch technisch sinnvoll, einsatzfähig und realisierbar zu gestalten. Gleichzeitig muss die Folie sehr dünn gehalten werden, damit die globale und (wenn zutreffend) auch die spezifische Migrationsgrenze eingehalten werden kann, um einen Reduktionsfaktor von 1 zu erreichen. Dadurch ergibt sich die Problematik, dass sich die derzeit verfügbaren Folien mit dem Reduktionsfaktor 1 fast ausschließlich für manuelle Anwendungen eignen. Zur maschinellen Verarbeitung werden dickere Folien und/oder elastischere Folien benötigt. Diese haben wiederum höhere Migrationswerte und somit höhere Reduktionsfaktoren oder werden wirtschaftlich und/oder technisch für den vorgesehenen Zweck nicht brauchbar. Erhältliche Weich-PVC-Stretch-Folien haben unter Berücksichtigung der genannten technischen Verwendbarkeit und wirtschaftlichen Realisierbarkeit folgende Faktoren-Schwellen:
Faktor 1 (Migration von ≤10 mg/dm²) = bis ca. 7 my (0,007 mm) Stärke, Faktor 2 (Migration von ≤20 mg/dm²) = bis ca. 10 my (0,010 mm) Stärke, Faktor 3 (Migration von ≤30 mg/dm²) = bis ca. 14 my (0,014 mm) Stärke, Faktor 4 (Migration von ≤40 mg/dm²) = bis ca. 18 my (0,018 mm) Stärke. Diese Schwellen stellen Orientierungswerte dar. Durch den Einsatz von Polymer-Weichmachern können die Migrationswerte reduziert werden. So wird beispielsweise mit einer 20 my-Folie der Faktor 4 noch möglich.

Der Einsatz von Polymerweichmachern hat in der Praxis jedoch deutliche Grenzen. So wird die Folie zäher und lässt sich schlechter dehnen. Außerdem sind Polymer-Weichmacher sehr teuer und machen die Folie mit steigendem Anteil uninteressanter für Kunden und letztlich konkurrenzunfähig auf dem Markt. Die Folie wird also teurer, der Gebrauch als Stretch-Folie problematischer und führt beim Kunden zu einem erhöhten Wartungsbedarf der Verpackungsanlagen. Eine der Anwendung entsprechende funktions- und absatzfähige PVC-Stretch-Folie ist beispielsweise in 14 my mit einem Faktor 2 derzeit nicht realisierbar. Will man beispielsweise eine Faktor-2-Folie mit Hilfe eines 5-schichtigen Aufbaus herstellen, so werden die einzelnen Schichten sehr dünn. Bei dem derzeitigen Stand der Technik ist die Extrusion von Weich-PVC-Folien, die dünner als 7 my sind, bereits eine ernstzunehmende Herausforderung. Dabei kommt es bei dünnen Weich-PVC-Folien (≤ ca. 8my) vermehrt zu Faltenbildungen beim Aufwickeln der Folie auf die Rolle nach dem Extrudieren. Selbst wenn beim Aufwickeln der Folie im Produktionsprozess die Faltenbildung verhindert wird, so sind diese bei einer Weiterverarbeitung nur sehr schwer zu vermeiden. Dies macht eine andere Technologie als die Co-Extrusion (z.B. alle Arten von Kaschierung oder Laminierung) für die Herstellung von mehrschichtigen dünneren Weich-PVC-Folien technisch nicht anwendbar.

Co-extrudierte Lebensmittelverpackungsfolien mit Weichmacheranteilen an sich sind bekannt. So beschreibt die DE2839083A1 u.a. ein co-extrudiertes Lebensmittelverpackungsmaterial, das aus zwei verschiedenen Schichten zusammengesetzt ist, wobei eine Schicht aus Vinyldenchloridcopolymer und einem niedermolekularen Weichmacher und die weitere Schicht (Trägerschicht) aus Homopolymeren oder Co-Polymeren von Vinylchlorid mit einem organischen Zusatz besteht, nämlich funktionellen Oligomeren, Fetten und Ölen, Kolophonium und dessen Derivaten.

Auch die US2016/0276105 beschreibt ein Verfahren zur Herstellung einer mehrschichtigen co-extrudierten und/oder laminierten Verpackungsfolie beispielsweise auch aus Polyvinylchlorid. Bei dem Verfahren kann eine Schmelze aus Polyvinylchlorid sowie einem oder mehreren Weichmachern bereitgestellt werden, woraus mindestens zwei Folienschichten hergestellt werden.

Die DE10 2004 000 023 A1 beschreibt ein Verfahren zur Herstellung von mehrschichtigen, laminierten Folien beispielsweise auch aus Polyvinylchlorid. Die eingesetzten Teilfolien können unterschiedliche Weichmacher, Weichmachergemische und/ oder Weichmacheranteile enthalten. Durch die diffusionsgetriebene Verschiebung von Weichmachern zwischen mindestens zwei in Kontakt zueinander befindlichen Teilfolien entsteht ein Endzustand, der andere Weichmachergehalte aufweist als im Zustand vor Kontaktherstellung.

Die US2010/0310891A1 beschreibt die Herstellung einer Folie zur Verwendung u.a. als Lebensmittelverpackungsfolie, bestehend aus Polyvinylchlorid mit mindestens einem Weichmacher, wobei der Weichmacher ein Ester einer Cyclohexancarbonsäure ist. Diese Folie kann mittels Extrusion hergestellt werden.

### Darstellung der Erfindung:

Vor diesem Hintergrund ist es Aufgabe der vorliegenden Erfindung, eine verbesserte mehrschichtige Lebensmittelverpackungsfolie herzustellen, bei der die Migration von Weichmachern in das verpackte Lebensmittel unter sonst gleichen Bedingungen deutlich reduziert oder gehemmt ist, um eine Gesamtmenge der migrierenden Weichmacher (Gesamtmigration) von 40 mg/dm² nicht zu überschreiten bzw. um Migrationsergebnisse mit stärkeren Folien erzielen zu können, die bisher technisch oder wirtschaftlich als nicht realisierbar galten.

Diese Aufgabe wird gelöst durch eine mehrschichtige co-extrudierte Lebensmittelverpackungs-folie gemäß der vorliegenden Erfindung sowie ein Verfahren zu deren Herstellung.

Die vorliegende Erfindung basiert auf der Beobachtung, dass Weichmacher von einer PVC-Folienschicht durch eine andere PVC-Folienschicht in ein verpacktes Lebensmittel migrieren können. Um die Migration von Weichmachern in das Lebensmittel zu verlangsamen bzw. weitestgehend zu reduzieren, wird erfindungsgemäß vorgeschlagen, dass die Lebensmittelverpackungsfolie durch einen co-extrudierten mehrschichtigen Folienaufbau verwirklicht wird. Erfindungsgemäß kommt PVC, PVDC, Kombinationen davon und/oder ein anderes mit PVC co-polymerisierbares Thermoplast oder Elastomer zum Einsatz.

Die Gesamtmenge der migrierenden Weichmacher (Gesamtmigration) soll 40 mg/dm², vorzugsweise 10 mg/dm² nicht überschreiten. In einer bevorzugten Variante wird ein Reduktionsfaktor von 1 (≤ 10 mg/dm²) erreicht und macht die erfindungsgemäß hergestellte Folie universell als Verpackungsmaterial für Lebensmittel einsetzbar. Gleichzeitig ist die Folie technisch für alle gängigen manuellen und maschinellen Anwendungen geeignet/anwendbar und wirtschaftlich sinnvoll/realisierbar.

Bei der Produktion von dünnen Weich-PVC-Lebensmittelfolien (Frischhaltefolien und Stretch-Folien) kommt die Co-extrusion bis heute nicht zum Einsatz und entspricht in diesem Bereich somit nicht dem Stand der Technik. Gleichzeitig ist die Realisierung der erfindungsgemäßen Folie ausschließlich durch die Co-extrusion möglich. Um auch mit dickeren Folien eine Gesamtmigrationsgrenze von maximal 40 mg/dm² einhalten zu können und gegenüber vergleichbaren Mono-PVC-Folien geringere Migrationswerte zu erzielen, bedarf es eines mehrschichtigen Folienaufbaus.

Je dicker die Gesamtfolie wird und/oder je geringer die angestrebte Migrationswertgrenze ist, desto mehr Folienschichten werden benötigt. Die Kombination der Weichmacher und Additive der einzelnen Schichten und auch der Schichtaufbau der Gesamtfolie werden dadurch immer komplexer und komplizierter.

Ein erster Aspekt der vorliegenden Erfindung betrifft ein Verfahren zur Herstellung einer mehrschichtigen co-extrudierten Lebensmittelverpackungsfolie aus Polyvinylchlorid (PVC), einer Kombination aus Polyvinylchlorid (PVC) und Polyvinylidenchlorid (PVDC) oder anderen mit PVC co-polymerisierbaren Thermoplasten oder Elastomeren mit gegenüber Monoschicht-PVC-Folien gleicher Stärke, jedoch verminderter Migration von Weichmachern in verpackte Lebensmittel. Das Verfahren umfasst die Schritte:
- Bereitstellen wenigstens einer Schmelze aus Polyvinylchlorid (PVC), einer Kombination aus Polyvinylchlorid (PVC) und Polyvinylidenchlorid (PVDC) oder anderen mit PVC co-polymerisierbaren Thermoplasten oder Elastomeren sowie einem oder mehreren Polymer- und/oder Monomer-Weichmachern,
- Erzeugen einer mehrschichtigen Folie aus wenigstens zwei Folienschichten durch Co-Extrusion der Schmelze(n) aus Polyvinylchlorid (PVC), Polyvinylidenchlorid (PVDC), einer Kombination aus Polyvinylchlorid (PVC) und Polyvinylidenchlorid (PVDC) oder anderen mit PVC co-polymerisierbaren Thermoplasten oder Elastomeren und dem einen oder den mehreren Polymer- und/oder Monomer-Weichmachern, wobei die globale Migration der Weichmacher aus dem Verbund der Lebensmittelfolie in das verpackte Lebensmittel nicht mehr als 40 mg/dm² entspricht.

Das erfindungsgemäße Produkt gleicht einer Weich-PVC Folie mit mehreren Schichten, die unterschiedliche Konzentrationen und Qualitäten von Weichmachern und/oder ggf. weiteren Zusatzstoffen aufweisen können. Vorzugsweise können die einzelnen Folienschichten in ihren Stärken beliebig variieren. In einer bevorzugten Ausführungsform werden eine tragende Folienschicht und wenigstens eine daran angrenzende Folienschicht co-extrudiert, wobei die tragende Folienschicht eine stärkere Schichtstärke aufweist als die wenigstens eine daran angrenzende Folienschicht.

Vorzugsweise werden alle co-extrudierten Folienschichten der mehrschichtigen Folie in etwa mit der gleichen Schichtstärke co-extrudiert. Bevorzugt werden eine tragende, vorzugsweise eine zentrale, Folienschicht und mehrere äußere Folienschichten co-extrudiert, wobei die Stärke der Folienschichten von innen nach außen zur Verpackungsgut zugewandten Seite abnimmt. Die Abnahme erfolgt vorzugsweise stufenweise. Daneben sind auch alternierende oder variierende Schichtstärken möglich. Ferner kann die Art und Konzentration von Weichmachern in einer, mehreren oder allen Schichten unterschiedlich gering oder hoch ausfallen. Als Weichmacher eignen sich beispielsweise Ester aus langkettigen Alkoholen mit mehrwertigen Säuren.

In einer bevorzugten Variante ist die Konzentration von Weichmachern in den dem Verpackungsgut zugewandten Schichten geringer als die Konzentration in einer dem Verpackungsgut abgewandten Schicht. Vorzugsweise werden einer oder mehreren beliebigen Folienschichten Weichmacher zugesetzt, die ein geringeres oder höheres Migrationsverhalten aufweisen als der/die Weichmacher einer, mehrerer oder aller anderen Folienschicht(en).

In weiteren Ausführungsvarianten werden PVC-Folien co-extrudiert, die bis zu 13 Schichten aufweisen. Vorzugsweise sind eine oder mehrere Barriereschichten vorgesehen, welche die Migration von Weichmachern in das verpackte Produkt entweder hemmen oder verringern. Vorzugsweise enthält die Barriereschicht Substanzen, welche die Weichmacher binden oder die Barriereschicht enthält gering migrierende Weichmacher, welche ihrerseits die Weichmachermigration aus anderen Folienschichten durch die Barriereschicht hemmen und damit eine Migration nach außen in das verpackte Lebensmittel verhindern.

Die vorliegende Erfindung ermöglicht die Herstellung einer mehrschichtigen PVC-Lebensmittelverpackungsfolie, die trotz höherer Gesamtstärke ähnlich geringe Migrationswerte aufweist wie eine dünne Monoschicht-PVC-Folie. Vorzugsweise beträgt die globale Migration nicht mehr als 10 mg/dm² Folie, bevorzugter nicht mehr als 5 mg/dm² Folie und die spezifische Migration nicht mehr als 3 mg/dm². Dadurch erhält man einen Korrekturfaktor oder Reduktionsfaktor von 1. Die erfindungsgemäße Folie ist wirtschaftlich für Hersteller und Kunden und zudem deutlich attraktiver, technisch deutlich leistungsfähiger und/oder generell universeller einsetzbar als eine vergleichbare mono-extrudierte PVC-Lebensmittelverpackungs-folie.

Durch den Einsatz der Co-Extrusion können zudem dickere Gesamtfolienstärken mit geringeren Migrationswerten wirtschaftlich und technisch sinnvoll verwirklicht werden, als dies mit herkömmlichen Mono-Extrusionsverfahren der Fall ist. Erfindungsgemäß ist daher vorgesehen, dass wenigstens zwei Folienschichten durch Co-Extrusion von weichem Polyvinylchlorid (PVC), Polyvinylidenchlorid (PVDC), einer Kombination aus Polyvinylchlorid (PVC) und Polyvinylidenchlorid (PVDC) oder anderen mit PVC co-polymerisierbaren Thermoplasten oder Elastomeren erzeugt werden. Die dadurch entstehende(n) Grenzschicht(en) können geringfügig migrationshemmende Retentionseigenschaften für die Weichmacher aufweisen, so dass ein Austritt der Weichmacher aus der/den Folienschicht(en), die keinen direkten Kontakt mit dem verpackten Lebensmittel haben, verlangsamt und die Gesamtmigration der Weichmacher aus der Folie in das zu verpackende Lebensmittel unter sonst gleichen Bedingungen somit zwar nicht entscheidend, jedoch unterstützend reduziert wird.

In einer ersten Variante wird für die Co-Extrusion eine oder mehrere PVC-Mischungen bis zum Schmelzpunkt erhitzt und durch einen Mehrschicht-Breitschlitz oder einen Mehrschicht-Extruderkopf mit mehreren Düsen, entsprechend der Schichtanzahl, ausgestoßen und danach direkt vereinigt. Hierzu kommt eine Co-Extrusionsanlage zum Einsatz, die unter anderem einen oder mehrere Schneckenextruder, einen Mehrschicht-Extruderkopf bzw. einen Mehrschicht-Breitschlitz, eine Kühlung (z.B. eine Kühlwalze oder einen Kühlring) sowie einen Wickler umfasst.

Die Anzahl der für die Plastifizierung des Materials benötigten Schneckenextruder hängt von der Anzahl der Folienschichten und von der Anzahl der unterschiedlichen Rezepturzusammensetzungen der einzelnen Schichten ab. In einer Ausführungsvariante entspricht die Anzahl der Schneckenextruder der Anzahl der Folienschichten. In einer alternativen Ausführungsform weicht die Anzahl der Schneckenextruder ab, da die Rezeptur einiger Schichten identisch sein kann. In bevorzugten Ausführungsvarianten können sogar mehrere oder alle Schichten dieselbe Rezeptur haben, so dass nur ein Schneckenextruder zum Einsatz kommt.

Erfindungsgemäß hat das Co-Extrusionsverfahren den Vorteil, dass bei Bedarf mehrere Schichten gebildet werden können, die unterschiedliche Typen und/oder Konzentrationen von Weichmachern aufweisen können. Die erfindungsgemäß hergestellten Folien weisen eine Stärke zwischen 5 my und 25 my auf. Sie sind in der Stärke generell jedoch nicht begrenzt. Auch Zwischenwerte oder Zwischenbereiche dieser Stärken sind von der Erfindung umfasst.

Der erfindungsgemäße Aufbau der co-extrudierten Folie ermöglicht deutlich geringere Produktkosten für die Herstellung der erfindungsgemäßen Lebensmittelverpackungsfolie, da die Folienstärke für ein und dieselbe Anwendung reduziert werden kann bei ähnlichen, gleichbleibenden oder gar verbesserten technischen Folieneigenschaften und Folienqualitäten im Vergleich zu Monoschichtfolien. Des Weiteren bietet der mehrschichtige Folienaufbau mehr Spielraum bei der Auswahl der Komponenten für die Zusammensetzung der einzelnen Schichten und somit auch die Möglichkeit neben der Migrationsreduzierung auch die Materialkosten zu reduzieren.

Erfindungsgemäß umfasst das Verfahren zur Herstellung der erfindungsgemäßen mehrschichtigen co-extrudierten Lebensmittelverpackungsfolie aus PVC oder einer Kombination aus PVC und PVDC oder anderen mit PVC co-polymerisierbaren Thermoplasten oder Elastomeren in einem ersten Verfahrensschritt ein Vermischen und Einschmelzen von Roh- und Hilfsstoffen (Pulver oder Granulate aus PVC, PVDC oder Derivaten davon, Weichmacher und andere Zusatzstoffe) und eine Extrusion der Mischung zu Granulaten mittels eines Mischers für die Weiterverarbeitung. Der Mischer hat die Funktion, Roh- und Hilfsstoffe (z.B. PVC-Pulver, Weichmacher, Zusatzstoffe wie Wachse, Öle und Säuren) einzuschmelzen, zu vermischen und direkt zu extrudieren, um so direkt Granulate zu schneiden. Diese Granulate werden erfindungsgemäß im zweiten Schritt am Folienextruder wieder eingeschmolzen und zu der erfindungsgemäßen Folie extrudiert.

Vorzugsweise liegt die Extrusionstemperatur bei der Folienenxtrusion zwischen 150°C und 180°C. Je nach Ausführungsvariante erfolgt ein Einschmelzen der zuvor extrudierten Granulate oder ein direktes Vermengen und Einschmelzen der Rohstoffe und anschließende Extrusion der Folie. Die co-extrudierte Folie wird anschließend gekühlt.

Bedarfsweise kommen unterschiedliche Zusammensetzungen einzelner oder mehrerer Folienschichten durch Einsatz mehrerer Schneckenextruder zum Einsatz. Vorzugweise erfolgt bei Bedarf oder nach Möglichkeit eine Perforation, Nadelung und/oder Bedruckung vor dem Schneidevorgang und dem Aufwickeln der Folie. Vorzugsweise erfolgt ein Zuschneiden auf Format und unmittelbar darauf die Aufwicklung. Die Aufwicklung kann je nach Ausführungsform nach der Besäumung und dem Schneiden einseitig oder zweiseitig erfolgen. Vorzugsweise beträgt die Geschwindigkeit eines PVC-Blasfolien-Extruders (Extrusions- und Wickelgeschwindigkeit) ca. 90 Meter bis 400 Meter pro Minute in Abhängigkeit von dem Aufbau der Co-Extrusion-Anlage, den Kühlmöglichkeiten (Technische Umsetzung bei der Kühlwalze und Weg zum Wickler bei der Gießfolienextrusion sowie technische Umsetzung bei der Kühlung und Höhe des Kühlturmes bei der Blasfolienextrusion), der Gesamtstärke und der Zusammensetzung der Folie. Dabei sind auch Zwischenwerte oder Zwischenbereiche in dem oben genannten Geschwindigkeitsbereich eingeschlossen. In Abhängigkeit von der Technologie und auch dem technischen Fortschritt, kann eine Geschwindigkeit von mehr als 400 Meter pro Minute möglich sein.

In einer bevorzugten Ausführungsvariante kommen in der Folienzusammensetzung neben Polyvinylchlorid (PVC), einer Kombination aus PVC und PVDC oder anderen mit PVC co-polymerisierbaren Thermoplasten oder Elastomeren eine oder mehrere folgender Komponenten zum Einsatz:
- Monomere und/oder polymere Weichmacher
- Antioxidationsmittel
- Anti-Säure-Mittel (Anti Acid)
- Anti-Beschlag (Anti Fog)
- Verarbeitungshilfsmittel (Processing Aid) - z.B. PE-Wachst
- Gleitmittel (Slip Agent)
- Öle, Fettsäuren und/oder Hilfsstoffe

Bevorzugte in der vorliegenden Erfindung eingesetzteThermoplaste, auch Plastomere genannt, sind beispielsweise Polyethylen (PE), Polypropylen (PP), Polyamid (PA), Polycarbonate (PC), Polyester, Polyethylenterephthalat (PET), Polystyrol (PS), Polyvinylchlorid (PVC), Polyvinylidenchlorid (PVDC), Polyvinylacetat (PVAC) und Polyvinylidenfluorid (PVDF). Bevorzute Elastomere sind beispielsweise Ethylen-Vinylacetat (EVA) und Polyvinylbutyral (PVB).Die aufgeführten Thermoplaste und Elastomere sind lediglich Beispiele und können durch weitere ergänzt werden. Die Erfindung beschränkt sich nicht ausschließlich auf die aufgeführten Thermoplaste und Elastomere.

Als mit PVC-co-polymerisierbare Thermoplaste und Elastomere sind PVDC, PVAC, PVDF, EVA und PVB als bevorzugte Varianten hervorzuheben, die erfindungsgemäße Nutzung ist jedoch nicht ausschließlich auf diese begrenzt. Auch andere Co-polymerisate sind von der Erfindung mitumfasst, sofern diese technisch machbar und sinnvoll sind.

Die erfindungsgemäße mehrschichtige co-extrudierte Folie umfasst mindestens zwei Folienschichten, wobei sich bei den entstehenden Grenzschichten zwischen den Folienschichten mikroskopisch kleine Unterbrechungen ausbilden, die einen geringfügig hemmenden Einfluss auf die Migration von Weichmachern besitzen können.

Diese sind jedoch nicht Kern, Ziel oder Ergebnis der erfindungsgemäßen mehrschichtigen Weich-PVC-Folien.

Vorzugsweise ist die Folienschicht, die mit dem Produkt in Berührung kommt, in ihrer Folienstärke dünner ausgeprägt als die weitere(n) Folienschicht(en). Die weitere(n) Schicht(en) kann/können - je nach Ausführungsvariante - ausgehend vom verpackten Produkt hin zur Außenlage in Ihrer Stärke dicker werden, müssen es aber nicht. Vorzugsweise beträgt die Schichtstärke der mit dem Produkt in Kontakt tretenden Schicht(en) ≤1,5 my. Die Gesamtschichtstärke einer Mehrschichtfolie liegt vorzugsweise zwischen 5 my bis 25.

Die Stärke der äußeren Schicht und aller anderen Schichten ist jedoch in Abhängigkeit von der Gesamtstärke der Folie, der jeweiligen Zusammensetzung der Folienschichten, dem gewünschten/notwendigen Ergebnis in Bezug auf die Migration und die Maschinentauglichkeit und auch den technischen Möglichkeiten der Produktionsanlage beliebig variierbar und kombinierbar. Durch diesen Folien- bzw. Schichtaufbau lässt sich die Gesamtmigration (und bei Relevanz auch die spezifische Migration) von Weichmachern in das verpackte Lebensmittel aus dem Folienschichtsystem kontrollieren und deutlich reduzieren.

Vorzugsweise beträgt die Schichtanzahl in einer bevorzugten Variante eines erfindungsgemäßen Folienschichtsystems bis zu 13 Schichten, vorzugsweise zwischen 2 und 10 Schichten oder einen beliebigen Bereich dazwischen. In einer weiter bevorzugten Variante ist die äußerste Folienschicht, die dem Lebensmittel zugewandt ist, nicht stärker als 1,5 my.

Neben dem Schichtaufbau sind auch die Art und die Konzentration der in den einzelnen Folienschichten eingesetzten Weichmacher ein wichtiges Kriterium zur Hemmung der Migration in ein verpacktes Lebensmittel. Dies führt zu den erwünschten geringen Migrationswerten und damit zu geringeren Reduktionsfaktoren, vorzugsweise einem Reduktionsfaktor von 1.

Neben den mikroskopisch kleinen Trennungen oder Unterbrechungen, welche sich bei einer co-extrudierten Folie zwischen den einzelnen Folienschichten ausbilden und in ihrer Summe bereits eine leichte Hemmung der Gesamtmigration der Weichmacher bewirken können, hat vor Allem der Gesamtfolienaufbau den Effekt, dass zunächst die Weichmacher der äußersten Folienschicht in das verpackte Lebensmittel migrieren und die Weichmacher der vom Produkt weiter entfernt gelegenen Folienschicht(en) - in ihrer Migration verlangsamt oder gestört - beginnen, durch die dem Produkt näher liegende(n) Schicht(en) hindurch zu migrieren. Dieser Effekt kann durch den Einsatz von einer oder mehreren Migrations-Barriere-Schichten mit darin enthaltenen Polymer-Weichmachern und möglichst wenig migrationsfördernden öl- oder fetthaltigen Additiven zum verpackten Produkt hin verstärkt werden, wodurch die unerwünschte Migration der Weichmacher in das Verpackungsgut noch weiter minimiert werden.

Als Weichmacher-Barriere-Schicht(en) dienen Anpassungen der Rezepturen einer oder mehrerer äußeren Schicht(en) hin zum Verpackungsgut bzw. der Schicht(en), die mit dem Produkt in Berührung kommen (können). In diesen Barriere-Schichten können weniger Weichmacher und/oder andere Weichmacher eingesetzt werden, die weniger dazu neigen zu migrieren. Auch andere migrationshemmende Additive sind von der Erfindung umfasst und können in eine oder mehrere Barriere-Schichten eingesetzt werden.

Durch den erfindungsgemäßen Aufbau kann die Migration von Weichmachern bei gleichbleibender Gesamtdicke der Lebensmittelverpackungsfolie mit steigender Anzahl der Schichten unabhängig von der Zusammensetzung oder Rezeptur der einzelnen Schichten beeinflusst werden. Vorteilhaft ist ferner, dass die Gesamt-Folien-Stärke co-extrudierter Lebensmittelverpackungsfolien durch verbesserte Eigenschaften und Qualitätsvorteilen dünner gehalten werden kann als bei einer entsprechenden mono-extrudierten Folie. Da dünnere PVC-Lebensmittelverpackungsfolien in der Summe weniger Weichmacher enthalten, ist die Gesamtmigration von Weichmachern in das verpackte Lebensmittel unter sonst gleichen Bedingungen geringer. Daher ist es von Vorteil, die Eigenschafts- und Qualitätsvorzüge einer co-extrudierten PVC-Frischhaltefolie für eine Reduzierung der Gesamtfolienstärke zu nutzen. Daneben ist es hilfreich, die äußere(n) Schicht(en) möglichst dünn zu gestalten und diese bei Bedarf als Barriere-Schicht(en) einzusetzen. Mit steigender Anzahl von Barriere-Schichten, die zum Produkt hin angeordnet sind, lässt sich eine geringer werdende Migration von Weichmachern in das verpackte Lebensmittel erreichen. Zusammengefasst wird durch den mehrschichtigen Folienaufbau ein Migrieren von Weichmachern aus vom Lebensmittel weiter entfernt gelegenen Folienschicht(en) durch eine oder mehrere Folienschicht(en) hindurch gehemmt oder zumindest deutlich verringert.

In einer bevorzugten Variante ist vorgesehen, dass auch die Konzentration und die Art der Weichmacher und anderer Additive in den einzelnen Folienschichten variieren und beliebig kombiniert werden können, um das angezielte Migrationsergebnis zu erreichen. Vorzugsweise werden in den äußeren Folienschichten Weichmacher und/oder Additive eingesetzt, die ein geringes Migrationsverhalten aufweisen oder die Migration in hemmender Weise beeinflussen. Vorzugsweise eignen sich für diesen Zweck Polymerweichmacher. In einer bevorzugten Variante sind diese Weichmacher vermehrt in der/den äußeren, d.h. dem Lebensmittel zugewandten, Folienschicht(en), jedoch weniger bis gar nicht in den zentralen Folienschichten bzw. der/den weiter vom Produkt entfernten Folienschicht(en) enthalten.

In einer bevorzugten Variante enthält eine tragende Folienschicht oder (bei einer geraden Anzahl von Schichten) die Mittelschichten oder einzelne dem Lebensmittel abgewandte Folienschichten bevorzugt Monomer-Weichmacher, um die Produktkosten geringer und die Folie elastischer zu halten. In die äußeren Folienschichten, vorzugsweise in die Barriere-Schichten, werden vermehrt Polymerweichmacher zugemischt, um die Migration zu hemmen. Vorzugsweise werden auf beiden Seiten nach außen hin vermehrt Polymerweichmacher zugegeben als in weiter innen liegenden Schichten. Dies minimiert das Risiko, dass die PVC-Lebensmittelfolie bei Gebrauch, beispielsweise an der Käsetheke im Supermarkt, falsch eingesetzt und das verpackte Lebensmittel unzulässig kontaminiert wird.

Die Weichmachertypen, Weichmachermengen und deren Konzentrationen der Mischungen können von Folienschicht zu Folienschicht variieren und werden in Abhängigkeit von den Gegebenheiten (u.a. Gesamtfoliendicke, zu verpackendes Produkt, Anzahl der Folienschichten, Art der Anwendung) und dem angestrebten Ergebnis individuell angepasst. Vorzugsweise variieren diese Konzentrationen zwischen 3 Gew.-% und 35 Gew.-% bezogen auf die Gesamtkonzentration, bevorzugt zwischen 25 Gew.-% und 35 Gew.-%. Bei Folien, die nicht oder kaum gedehnt werden müssen, können die Weichmacher-Konzentrationen auch zwischen 3 Gew.-% und 15 Gew.-% variieren. Innerhalb dieser Bereiche sind auch beliebige Zwischenwerte oder Zwischenbereiche von der Erfindung umfasst.

Es können sowohl monomere als auch polymere Weichmacher eingesetzt werden. Die einzelnen Weichmacher haben unterschiedliche Migrationsverhalten und Migrationswerte. Polymer-Weichmacher zeigen dabei eine deutlich geringere Migrationsrate als Monomer-Weichmacher. Da Polymer-Weichmacher jedoch sehr teuer sind und die technische Leistungsfähigkeit bzw. Maschinentauglichkeit der Folie negativ beeinflussen können, ist stets eine Mischung aus beiden Weichermacher-Gruppen ratsam und ein vermehrter Einsatz von Polymer-Weichmachern für Barriere-Zwecke sinnvoll. In den weiter vom verpackten Produkt entfernten Folienschichten sollten vorzugsweise geringer migrierende monomere Weichmacher eingesetzt werden. So bleibt die Folie elastisch, belastbar und bezahlbar für die Kunden.

Durch die über die erfindungsgemäße co-extrudierte mehrschichtige Folie erreichte Stärkenreduzierung wird die Menge von Weichmachern, die in das verpackte Lebensmittel wandern können, signifikant auf die erwünschten Werte reduziert. Daneben hat eine Stärkenreduktion auch einen sehr positiven Einfluss auf die Umweltbelastung, da sich der Gesamtverbrauch von PVC-Folien unter sonst gleichen Bedingungen senken lässt. Somit eignet sich die erfindungsgemäße Lebensmittelverpackungsfolie für Lebensmittel, was der Gesundheit der Konsumenten dient, gleichzeitig wird jedoch auch die Umwelt geschont. Hinzu kommen die bei einer Co-Extrusion geringeren Materialkosten, da sich Stärkenreduzierungen bei ähnlicher oder gleichbleibender Qualität oder gar einem Qualitätsgewinn realisieren lassen und für die Kunden trotz deutlicher Migrationsreduzierung wirtschaftlich sinnvoll und bezahlbar bleiben.

Vorzugsweise besteht die erfindungsgemäße Mehrschichtfolie aus wenigstens zwei, vorzugsweise mehr als zwei co-extrudierten Folienschichten aus Polyvinylchlorid (PVC), Polyvinylidenchlorid (PVDC), einer Kombination aus Polyvinylchlorid (PVC) und Polyvinylidenchlorid (PVDC) oder anderen mit PVC co-polymerisierbaren Thermoplasten oder Elastomeren. In einer bevorzugten Ausführungsform ist ferner vorgesehen, dass eine oder mehrere äußere Folienschichten als Migrations-Barriere-Schicht ausgebildet ist/sind, die in erster Linie, vermehrt oder ausschließlich Polymerweichmacher aufweisen. Alternativ oder unterstützend können in den Barriere-Schichten auch weniger Weichmacher eingesetzt werden, die gleichzeitig ein möglichst geringeres Migrationsveralten haben können (z.B. polymere oder geringer migrierende monomere Weichmacher).

Die erfindungsgemäße co-extrudierte Weich-PVC-Folie eignet sich als Frischhaltefolie und Stretch-Folie für Lebensmittelverpackungen. Es können aber auch -unter Variierung der Gesamtmenge der eingesetzten Weichmacher in Gew.-% und Variierung der Gesamtfolienstärken bis 25 my- diverse andere Anwendungen mit der erfindungsgemäßen Folie angestrebt und realisiert werden. So ist beispielsweise der Einsatz für Vakuumverpackungen, Schutzgasverpackungen (Modified-Atmosphere-Packaging - MAP) und für Konfektionszwecke (Standbodenbeutel, Beutel allgemein, Säcke, halbfertige Folien wie FFS, usw.) möglich.

Es können ferner andere Folien oder Folienverbunde mit der erfindungsgemäßen Folie kaschiert oder laminiert werden. Vorzugsweise ist die kaschierte bzw. laminierte Folie ebenfalls aus PVC und/oder PVDC oder einem co-polymerisierbaren Thermoplast, um eine Wiederverarbeitung zu ermöglichen und durch die Sortenreinheit einen wesentlichen Beitrag für den Umweltschutz beizutragen, da das Recyceln möglich wird. Dies ist bei bisher üblichen Verbunden von PVDC oder PVC mit EVA und anderen Polymeren (wie beispielsweise PE oder PP) nicht oder nur unter deutlich erhöhtem Aufwand durch spezielle Technologien (wie beispielsweise "Vinyloop von Solvay") möglich. Die Möglichkeit der weiteren Laminierung, Kaschierung und/oder Konfektionierung macht die Folie im Bereich Lebensmittelverpackungen sehr universell einsetzbar und eröffnet viele neue Möglichkeiten für Produktentwicklungen und -modifizierungen, da PVC und PVDC sehr gute technische Eigenschaften haben und durch die Qualität und Quantität der Additive sehr stark verändert und den jeweiligen Anwendungen angepasst werden können. Der hier verwendete Begriff "Lebensmittelverpackungsfolie" umfasst alle diese Anwendungen

### Wege zur Ausführung der Erfindung und gewerbliche Verwertbarkeit:

Die Erfindung wird in den nachfolgenden Beispielen erläutert.

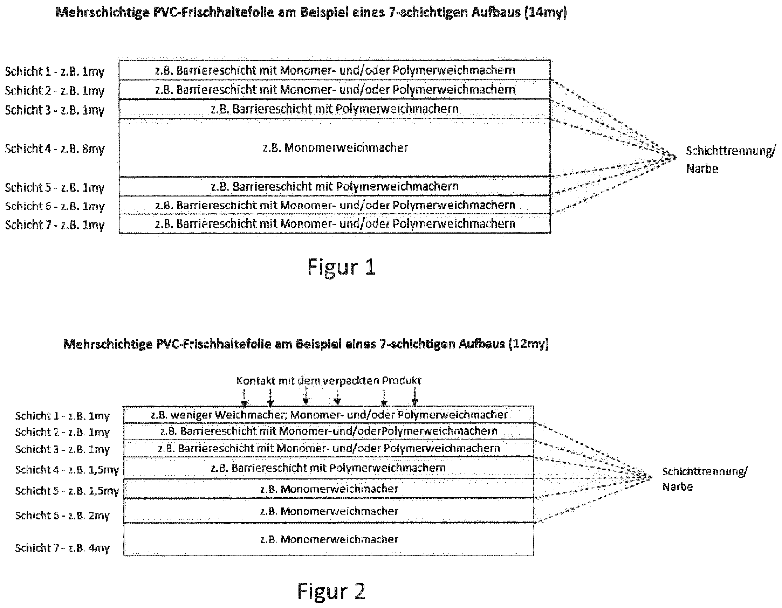

Die Figuren 1 bis 3 zeigen unterschiedliche Mehrschichtsysteme von PVC-Frischhaltefolien mit unterschiedlichem Schichtaufbau und unterschiedlicher Schichtstärke.

In Fig. 1 ist eine tragende zentrale Folienschicht aus Monomer-Weichmachern vorgesehen. Daran angrenzend sind mehrere Migrations-Barriere-Schichten mit Polymer- und/oder Monomer-Weichmachern ausgebildet. Die Folienstärke der zentralen Folienschicht beträgt im gezeigten Beispiel 8 my, die Folienstärken der äußeren Folienschichten betragen jeweils 1 my. Zwischen den einzelnen Folienschichten bildet sich durch die Co-extrusion Trennung bzw. Unterbrechung, die als Schichttrennung/Nadel bezeichnet werden und zur Hemmung der Migration von Weichmachern von innen nach außen geringfügig beitragen können.

Gezeigt ist ein siebenschichtiger Aufbau mit einer Gesamtfolienstärke von 14 my.

In Fig. 2 ist ein weiteres Beispiel gezeigt, wobei die Folienschichten zwischen 1 und 4 my variieren. Die äußeren Folienschichten weisen eine geringere Konzentration von Weichmachern auf als die zentral gelegenen bzw. vom Produkt weiter entfernten Folienschichten. Gezeigt ist ein siebenschichtiger Aufbau mit 12 my Gesamtfolienstärke und einer einseitigen Migrationshemmung (zum verpackten Lebensmittel).

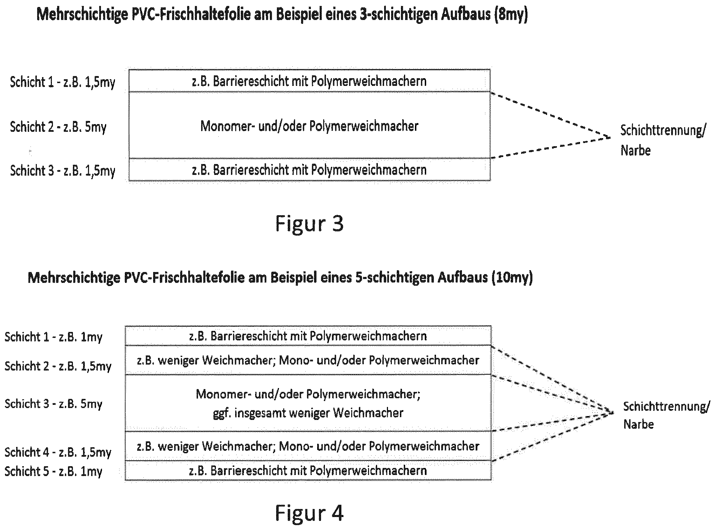

In Fig. 3 ist eine mehrschichtige PVC-Frischhaltefolie mit einem dreischichtigen Aufbau gezeigt, wobei die Gesamtfolienstärke 8 my beträgt. Hier werden die äußeren Schichten als Migrations-Barriere-Schichten mit Polymer-Weichmachern versehen und die mittlere, tragende Schicht enthält eine Mischung aus Monomer- und Polymer-Weichmachern.

Ein ähnliches Beispiel ist auch in Fig. 4 zu sehen, bei der die Gesamtfolienstärke 10 my bei einem fünfschichtigen Aufbau zeigt. Auch hier sind die Außenschichten als Barriere-Sschichten mit Polymer-Weichmachern versehen und in den Schichten 2 und 4 ist die Konzentration der eingesetzten Monomer- und/oder Polymer-Weichmacher geringer als die Konzentration in der tragenden Folienschicht (Mittelschicht), die aus Monomer- und/oder Polymer-Weichmachern besteht. Vorzugsweise kommen die gleichen Monomer- und/oder Polymer-Weichmacher zur Anwendung. Jedoch können auch unterschiedliche Polymer-Wweichmacher oder Blockadesubstanzen, die eine Hemmung der Migration bewirken, in den einzelnen Folienschichten zum Einsatz kommen.

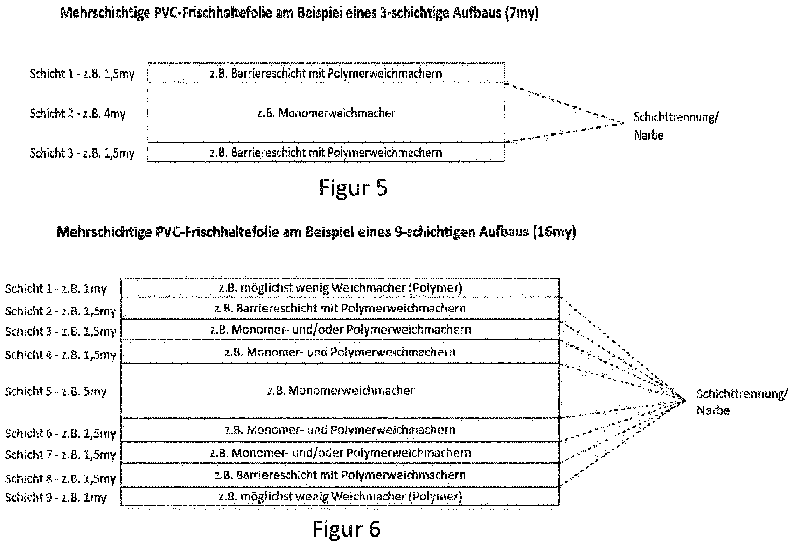

In Fig. 5 ist eine mehrschichtige PVC-Frischhaltefolie am Beispiel eines dreischichtigen Aufbaus mit einer Gesamtschichtstärke von 7 my gezeigt. Die tragende Folienschicht enthält nur Monomer-Weichmacher weist eine Stärke von 4 my auf, die daran angrenzenden äußeren Folienschichten enthalten nur Polymer-Weichmacher und weisen jeweils eine Stärke von 1,5 my auf.

In Fig. 6 ist eine PVC-Frischhaltefolie gezeigt, die aus einem 9-schichtigen Aufbau besteht. Die Gesamtschichtstärke beträgt 16 my. Eine tragende zentrale Folienschicht besteht aus Monomer-Weichmacher, die äußeren Folienschichten weißen eine geringere Konzentration von Weichmachern auf. Zudem sind die Schichten 2 und 8 als Migrations-Barriere-Schichten vorgesehen. Die Konzentrationen und Typen der Weichmacher in den einzelnen Schichten variieren.

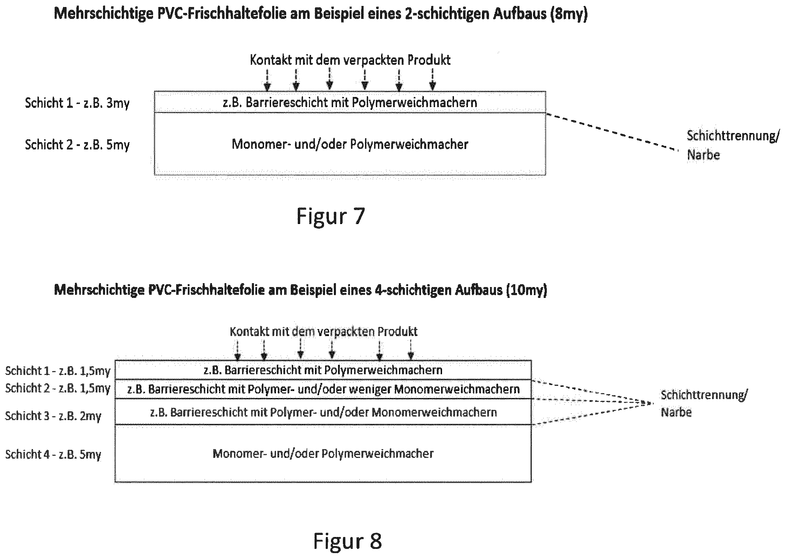

In Fig. 7 ist die Migrations-Barriere-Schicht mit Polymer-Weichmachern die äußere, dem Verpackungsgut zugewandte Schicht.

In Fig. 8 ist eine Ausführungsvariante gezeigt, bei der mehrere Migrations-Barriere-Schichten vorgesehen sind, auf der dem Verpackungsgut zugewandten Seite ausgebildet sind. Dabei variieren die Konzentrationen und Typen der Weichmacher in den einzelnen Schichten.

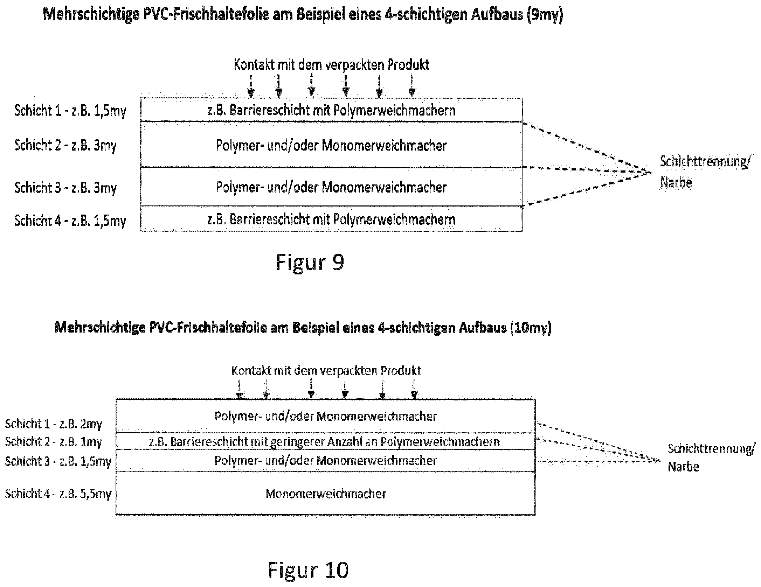

In Fig. 9 bis 11 sind weitere Varianten gezeigt, bei denen die Schichtstärken und Anzahl der einzelnen Folienschichten, deren Zusammensetzung sowie die Anzahl und Anordnung von Migrations-Barriere-Schichten entsprechend den zuvor genannten Beispielen variieren. Dabei zeigen die Figuren 9 und 10 Beispiele mit einer geraden Anzahl an Schichten.

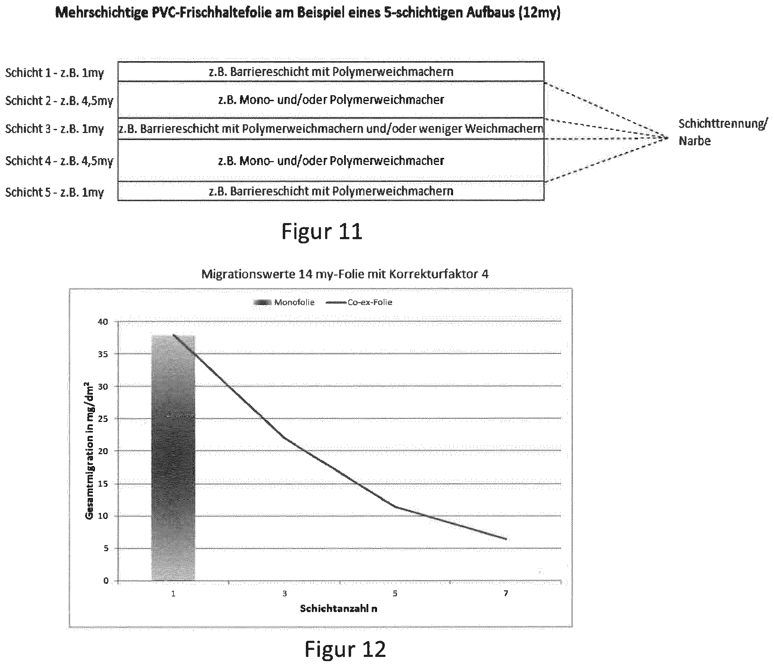

Fig. 12 zeigt ein Vergleichsbeispiel, bei dem die Migrationswerte der erfindungsgemäßen mehrschichtigen PVC-Folie in Vergleich zu einer Mono-PVC in Diagrammform dargestellt wurde. Deutlich ist zu sehen, dass durch den mehrschichtigen Aufbau und die erfolgte Co-Extrusion, die Gesamtmigration in ein verpacktes Lebensmittel (Beispiel hier: Fleisch) vermindert wurde. Erklärt wird die insbesondere dadurch, dass es einen mehrschichtigen Aufbau gibt und Migrations-Barriere-Schichten gebildet werden, welche die Migration der Weichmach von der Folienmitte hin zum Verpackungsgut hemmen. Die Migration kann weiter gesenkt werden, indem die Stärke der Folienschichten oder die Konzentration der Weichmacher in den einzelnen Schichten variiert wird. Ferner ist auch die Auswahl und Menge der Weichmacher für einzelne Folienschichten entscheidend sein, wobei bestimmten Folienschichten beispielsweise nur Monomer-Weichmacher, anderen Schichten wiederum Polymer-Weichmacher und anderen Schichten ein Gemisch aus Monomer- und Polymer-Weichmachern im Rahmen der Co-Extrusion beigemischt werden.

Je nach Anwendungsfall können die Gesamtstärke der Folie, die Stärke der einzelnen Schichten und auch deren Rezepturen sowie die Anzahl der Schichten im Rahmen der technischen Möglichkeiten beliebig variieren und zur Minimierung der Migration beitragen, so dass sich zahlreiche Möglichkeiten ergeben, um durch Variation und Kombination das gewünschte Migrationsergebnis für den jeweiligen Anwendungsfall zu erreichen und auch Kostensenkungspotenziale zu ermöglichen/auszuschöpfen.

## Patentansprüche

1. Verfahren zur Herstellung einer mehrschichten co-extrudierten Lebensmittelverpackungsfolie aus Polyvinylchlorid (PVC), Polyvinylidenchlorid (PVDC) oder einer Kombination aus Polyvinylchlorid (PVC) und Polyvinylidenchlorid (PVDC) mit gegenüber Monoschicht-PVC Folien vermindertem Migrationsverhalten von Weichmachern in das verpackte Lebensmittel, umfassend die Schritte:
- Bereitstellen wenigstens einer Schmelze aus Polyvinylchlorid (PVC), Polyvinylidenchlorid (PVDC) oder einer Kombination aus Polyvinylchlorid (PVC) und Polyvinylidenchlorid (PVDC) sowie einem oder mehreren Polymer- und/oder Monomer-Weichmachern,
- Erzeugen einer mehrschichtigen Folie aus mehr als zwei Folienschichten durch Co-Extrusion der Schmelze(n) aus Polyvinylchlorid (PVC), Polyvinylidenchlorid (PVDC) oder einer Kombination aus Polyvinylchlorid (PVC) und Polyvinylidenchlorid (PVDC) und dem einen oder den mehreren Polymer- und/oder Monomer-Weichmachern, so dass bei der aus dem Verfahren hervorgehenden Lebensmittelverpackungsfolie die Gesamtschichtstärke der Mehrschichtfolie 5 my bis 25 my, die Konzentration an Polymer- und/oder Monomer-Weichmachern pro Schicht zwischen 3 Gew-% und 35 Gew-% bezogen auf die Gesamtkonzentration beträgt und die globale Migration der Weichmacher aus dem Verbund der Lebensmittelfolie in das verpackte Lebensmittel nicht mehr als 40 mg/dm² Folie entspricht.

2. Verfahren nach Anspruch 1, **dadurch gekennzeichnet, dass** wenigstens eine tragende Folienschicht und wenigstens eine daran angrenzende Folienschicht co-extrudiert werden, wobei die tragende Folienschicht eine stärkere Schichtstärke aufweist als die wenigstens eine daran angrenzende Folienschicht.

3. Verfahren nach Anspruch 1 oder 2, **dadurch gekennzeichnet, dass** alle co-extrudierten Folienschichten der mehrschichtigen Folie in etwa mit der gleichen Schichtstärke co-extrudiert werden.

4. Verfahren nach Anspruch 1, 2 oder 3, **dadurch gekennzeichnet, dass** wenigstens eine Folienschicht mit einer geringeren Konzentration von Weichmachern co-extrudiert wird als eine daran angrenzende weitere Folienschicht.

5. Verfahren nach einem der vorhergehenden Ansprüche, **dadurch gekennzeichnet, dass** ein Vermengen und Einschmelzen der Rohstoffe bei einer Extrusionstemperatur von 150°C bis 180°C und die Extrusion und Wicklung der PVC-Lebensmittelfolie mit einer Geschwindigkeit von 90 bis 400 Metern pro Minute erfolgt.

6. Mehrschichtige co-extrudierte Lebensmittelverpackungsfolie aus Polyvinylchlorid (PVC) oder einer Kombination aus Polyvinylchlorid (PVC) und Polyvinylidenchlorid (PVDC) mit gegenüber Monoschicht-PVC Folien vermindertem Migrationsverhalten von Weichmachern in das verpackte Lebensmittel, bestehend aus
- einer ersten tragenden Folienschicht aus Polyvinylchlorid (PVC) oder einer Kombination aus Polyvinylchlorid (PVC) und Polyvinylidenchlorid (PVDC) mit darin enthaltenen Polymer- und/oder Monomer-Weichmachern,
- wenigstens zwei weiteren co-extrudierten Folienschichten aus Polyvinylchlorid (PVC), Polyvinylidenchlorid (PVDC) oder einer Kombination aus Polyvinylchlorid (PVC) und Polyvinylidenchlorid (PVDC), wobei wenigstens eine davon an die tragende Folienschicht angrenzt, wobei die Gesamtschichtstärke der Mehrschichtfolie 5 my bis 25 my entspricht, die Konzentration an Polymer- und/oder Monomer-Weichmachern pro Schicht zwischen 3 Gew-% und 35 Gew-% bezogen auf die Gesamtkonzentration beträgt und die globale Migration der Weichmacher aus dem Verbund der Lebensmittelfolie in das verpackte Lebensmittel nicht mehr als 40 mg/dm² Folie entspricht.

7. Mehrschichtige co-extrudierte Lebensmittelverpackungsfolie nach Anspruch 6, **dadurch gekennzeichnet, dass** die Schichtstärke einer äußeren, dem Verpackungsgut zugewandten Folienschicht geringer ist als die Schichtstärke einer dem Verpackungsgut abgewandten Folienschicht.

8. Mehrschichtige co-extrudierte Lebensmittelverpackungsfolie nach einem der vorhergehenden Ansprüche 6 bis 7, **dadurch gekennzeichnet, dass** eine oder mehrere beliebige Folienschicht(en) als Barriereschicht(en) ausgebildet ist/sind, die eine geringere Weichmacher-Konzentration und/oder migrationsärmere Weichmacher als die daran angrenzenden Folienschichten enthalten.

9. Mehrschichtige co-extrudierte Lebensmittelverpackungsfolie nach Anspruch 8, **dadurch gekennzeichnet, dass** eine Barriereschicht eine Weichmacher-bindende Substanz enthält.

10. Mehrschichtige co-extrudierte Lebensmittelverpackungsfolie nach einem der vorhergehenden Ansprüche 6 bis 9, **dadurch gekennzeichnet, dass** einzelne oder mehrere Schichten zusätzlich eine oder mehrere folgender Komponenten aufweisen:
Monomere und/oder polymere Weichmacher, Antioxidationsmittel, Anti-Säure-Mittel (Anti Acid), Anti-Beschlag (Anti Fog), Verarbeitungshilfsmittel (Processing Aid), Gleitmittel (Slip Agent), Öle, Fette, Fettsäuren und/oder Hilfsstoffe.

## Claims

1. A method for the production of a multilayer co-extruded food packaging film of polyvinyl chloride (PVC), polyvinylidene chloride (PVDC) or a combination of polyvinyl chloride (PVC) and polyvinylidene chloride (PVDC) with reduced migration behaviour of plasticisers into the packaged food compared to monolayer PVC films, comprising the steps:
- Providing at least one melt of polyvinyl chloride (PVC), polyvinylidene chloride (PVDC) or a combination of polyvinyl chloride (PVC) and polyvinylidene chloride (PVDC) and one or more polymer and/or monomer plasticisers,
- producing a multilayer film from more than two film layers by co-extrusion of the melt(s) of polyvinyl chloride (PVC), polyvinylidene chloride (PVDC) or a combination of polyvinyl chloride (PVC) and polyvinylidene chloride (PVDC) and the one or more polymer and/or monomer plasticisers, such that, in the food packaging film resulting from the process, the total layer thickness of the multilayer film is from 5 my to 25 my, the concentration of polymer and/or monomer plasticisers per layer is between 3 wt% and 35 wt% based on the total concentration, and the global migration of the plasticisers from the composite of the food film into the packaged food is not more than 40 mg/dm² of film.

2. The method according to claim 1, **characterized in that** at least one supporting film layer and at least one film layer adjacent thereto are co-extruded, the supporting film layer having a thicker layer thickness than the at least one film layer adjacent thereto.

3. The method according to claim 1 or 2, **characterized in that** all co-extruded film layers of the multi-layer film are co-extruded with approximately the same layer thickness.

4. The method according to claim 1, 2 or 3, **characterized in that** at least one film layer is co-extruded with a lower concentration of plasticizers than an adjacent further film layer.

5. The method according to any one of the preceding claims, **characterized in that** mixing and melting of the raw materials is carried out at an extrusion temperature of 150°C to 180°C and the extrusion and winding of the PVC food film is carried out at a speed of 90 to 400 metres per minute.

6. A multilayer co-extruded food packaging film of polyvinyl chloride (PVC) or a combination of polyvinyl chloride (PVC) and polyvinylidene chloride (PVDC) with reduced migration behaviour of plasticisers into the packaged food compared to monolayer PVC films, consisting of
- a first supporting film layer of polyvinyl chloride (PVC) or a combination of polyvinyl chloride (PVC) and polyvinylidene chloride (PVDC) with polymer and/or monomer plasticisers contained therein,
- at least two further co-extruded film layers of polyvinyl chloride (PVC), polyvinylidene chloride (PVDC) or a combination of polyvinyl chloride (PVC) and polyvinylidene chloride (PVDC), at least one of which is adjacent to the supporting film layer, the total layer thickness of the multilayer film being from 5 my to 25 my, the concentration of polymer and/or monomer plasticisers per layer is between 3 wt% and 35 wt% based on the total concentration and the global migration of the plasticisers from the composite of the food film into the packaged food is not more than 40 mg/dm² film.

7. The multilayer co-extruded food packaging film according to claim 6, **characterised in that** the layer thickness of an outer film layer facing the packaging material is less than the layer thickness of a film layer facing away from the packaging material.

8. The multilayer co-extruded food packaging film according to any one of the preceding claims 6 to 7, **characterised in that** one or more arbitrary film layer(s) is/are formed as barrier layer(s) which contain a lower plasticiser concentration and/or lower migration plasticisers than the film layers adjacent thereto.

9. The multilayer co-extruded food packaging film according to claim 8, **characterised in that** a barrier layer contains a plasticiser-binding substance.

10. The multilayer co-extruded food packaging film according to any one of the preceding claims 6 to 9, **characterized in that** one or more layers additionally comprise one or more of the following components: monomers and/or polymeric plasticisers, antioxidants, antiacid, anti-fog, processing aid, slip agent, oils, fats, fatty acids and/or excipients.

## Revendications

1. Procédé pour la fabrication d'une feuille coextrudée multicouche d'emballage alimentaire en poly(chlorure de vinyle) (PVC), poly(chlorure de vinylidène) (PVDC) ou en une combinaison de poly(chlorure de vinyle) (PVC) et de poly(chlorure de vinylidène) (PVDC) présentant un comportement de migration réduit des plastifiants dans l'aliment emballé par rapport aux feuilles monocouches en PVC, comprenant les étapes :
- préparation d'au moins une masse fondue de poly(chlorure de vinyle) (PVC), de poly(chlorure de vinylidène) (PVDC) ou d'une combinaison de poly(chlorure de vinyle) (PVC) et de poly(chlorure de vinylidène) (PVDC) ainsi que d'un ou de plusieurs plastifiants polymères et/ou monomères,
- production d'une feuille multicouche constituée par plus de deux couches de feuille par coextrusion de la/des masse(s) fondue(s) de poly(chlorure de vinyle) (PVC), de poly(chlorure de vinylidène) (PVDC) ou d'une combinaison de poly(chlorure de vinyle) (PVC) et de poly(chlorure de vinylidène) (PVDC) et dudit un ou desdits plusieurs plastifiants polymères et/ou monomères, de telle sorte que pour la feuille d'emballage alimentaire produite par le procédé, l'épaisseur de couche totale de la feuille multicouche correspond à 5 my à 25 my, la concentration en plastifiants polymères et/ou monomères par couche est située entre 3% en poids et 35% en poids, par rapport à la concentration totale et la migration globale des plastifiants à partir du composite de la feuille alimentaire dans l'aliment emballé n'est pas supérieure à 40 mg/dm² de feuille.

2. Procédé selon la revendication 1, **caractérisé en ce qu'**au moins une couche de feuille support et au moins une couche de feuille adjacente à celle-ci sont coextrudées, la couche de feuille support présentant une épaisseur de couche plus importante que celle de ladite au moins une couche de feuille adjacente à celle-ci.

3. Procédé selon la revendication 1 ou 2, **caractérisé en ce que** toutes les couches de feuille coextrudées de la feuille multicouche sont coextrudées environ à la même épaisseur de couche.

4. Procédé selon la revendication 1, 2 ou 3, **caractérisé en ce qu'**on coextrude au moins une couche de feuille présentant une concentration en plastifiants inférieure à celle d'une autre couche de feuille adjacente à celle-ci.

5. Procédé selon l'une quelconque des revendications précédentes, **caractérisé en ce qu'**on mélange et fait fondre les matières premières à une température d'extrusion de 150°C à 180°C et on réalise l'extrusion et l'enroulement de la feuille alimentaire en PVC à une vitesse de 90 à 400 mètres par minute.

6. Feuille coextrudée multicouche d'emballage alimentaire en poly(chlorure de vinyle) (PVC) ou en une combinaison de poly(chlorure de vinyle) (PVC) et de poly(chlorure de vinylidène) (PVDC) présentant un comportement de migration réduit des plastifiants dans l'aliment emballé par rapport aux feuilles en PVC monocouche, constituée par
- une première couche de feuille support en poly(chlorure de vinyle) (PVC) ou en une combinaison de poly(chlorure de vinyle) (PVC) et de poly(chlorure de vinylidène) (PVDC) contenant des plastifiants polymères et/ou monomères,
- au moins deux autres couches de feuille coextrudées en poly(chlorure de vinyle) (PVC), en poly(chlorure de vinylidène) (PVDC) ou en une combinaison de poly(chlorure de vinyle) (PVC) et de poly(chlorure de vinylidène) (PVDC), au moins l'une de celles-ci étant adjacente à la couche de feuille support, l'épaisseur de couche totale de la feuille multicouche correspondant à 5 my à 25 my, la concentration en plastifiants polymères et/ou monomères par couche étant située entre 3% en poids et 35% en poids, par rapport à la concentration totale et la migration globale des plastifiants à partir du composite de la feuille alimentaire dans l'aliment emballé n'étant pas supérieure à 40 mg/dm² de feuille.

7. Feuille coextrudée multicouche d'emballage alimentaire selon la revendication 6, **caractérisée en ce que** l'épaisseur de couche d'une couche de feuille externe, orientée vers le produit emballé, est inférieure à l'épaisseur de couche d'une couche de feuille opposée au produit emballé.

8. Feuille coextrudée multicouche d'emballage alimentaire selon l'une quelconque des revendications 6 à 7, **caractérisée en ce qu'**une ou plusieurs couche(s) de feuille quelconque(s) est/sont conçue(s) sous forme de couche(s) barrière, qui contien(nen)t une concentration en plastifiant inférieure et/ou un plastifiant à migration inférieure à celle des couches de feuille adjacentes.

9. Feuille coextrudée multicouche d'emballage alimentaire selon la revendication 8, **caractérisée en ce qu'**une couche barrière contient une substance liant le plastifiant.

10. Feuille coextrudée multicouche d'emballage alimentaire selon l'une quelconque des revendications 6 à 9, **caractérisée en ce qu'**une couche individuelle ou plusieurs couches présentent en outre un ou plusieurs des composants suivants : plastifiant monomère et/ou polymère, antioxydant, agent antiacide (Anti Acid), agents antibuée (Anti Fog), adjuvant de mise en œuvre (Processing Aid), agent lubrifiant (Slip Agent), huiles, graisses, acides gras et/ou adjuvants.
